(19) **Europäisches Patentamt**
**European Patent Office**
**Office européen des brevets**

(11) **EP 3 645 202 B1**

(12) **EUROPÄISCHE PATENTSCHRIFT**

(45) Veröffentlichungstag und Bekanntmachung des Hinweises auf die Patenterteilung:
**04.08.2021** **Patentblatt 2021/31**

(51) Int Cl.:
**B23K 9/12** (2006.01)      **B23K 9/32** (2006.01)
**B23K 9/173** (2006.01)

(21) Anmeldenummer: **18731494.3**

(22) Anmeldetag: **22.06.2018**

(86) Internationale Anmeldenummer:
**PCT/EP2018/066798**

(87) Internationale Veröffentlichungsnummer:
**WO 2019/002141 (03.01.2019 Gazette 2019/01)**

(54) **VERFAHREN UND VORRICHTUNG ZUR ABTASTUNG EINER WERKSTÜCKOBERFLÄCHE EINES METALLISCHEN WERKSTÜCKES**

METHOD AND DEVICE FOR SAMPLING A WORKPIECE SURFACE OF A METALLIC WORKPIECE

PROCÉDÉ ET DISPOSITIF DE DÉTECTION D'UNE SURFACE DE PIÈCE À USINER MÉTALLIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.06.2017 EP 17177839**

(43) Veröffentlichungstag der Anmeldung:
**06.05.2020 Patentblatt 2020/19**

(73) Patentinhaber: **Fronius International GmbH**
**4643 Pettenbach (AT)**

(72) Erfinder:
• **MAYER, Manuel**
**4650 Edt bei Lambach (AT)**

• **WALDHÖR, Andreas**
**4643 Pettenbach (AT)**
• **ARTELSMAIR, Josef**
**4552 Wartberg (AT)**
• **SÖLLINGER, Dominik**
**4631 Krenglbach (AT)**

(74) Vertreter: **Isarpatent**
**Patent- und Rechtsanwälte Barth**
**Charles Hassa Peckmann & Partner mbB**
**Friedrichstrasse 31**
**80801 München (DE)**

(56) Entgegenhaltungen:
**JP-A- 2007 090 390      US-A- 5 399 837**
**US-A1- 2002 011 474      US-A1- 2006 157 533**

## Beschreibung

Die Erfindung betrifft ein Verfahren und eine Vorrichtung zum Abtasten einer Werkstückoberfläche eines metallischen Werkstückes mittels einer Schweißelektrode gemäß dem Oberbegriff der Ansprüche 1 und 17 (siehe z.B. US 5 399 837 A).

Es sind herkömmliche Abtastsysteme bekannt, bei denen mittels mechanischer Bewegung eines Drahtstückes relativ zu einer Werkstückoberfläche eines Werkstückes die Werkstückoberfläche abgetastet und vermessen wird. Das Drahtstück eines derartigen herkömmlichen Abtastsystems kann mithilfe von Antriebsrollen wiederkehrend vorwärts- und zurückbewegt werden. Sobald ein Kontakt eines Drahtendes des Drahtstückes mit der Werkstückoberfläche des Werkstückes detektiert wird, wird das Drahtende des Drahtstückes zurückbewegt. Bei dieser Vorwärts- und Rückwärtsbewegung dieses Drahtstückes können hohe Beschleunigungskräfte auftreten, insbesondere beim Auftreffen des Drahtendes auf der Werkstückoberfläche. Darüber hinaus wirken auf das mechanisch bewegte Drahtstück Druckkräfte, welche durch die Antriebsrollen hervorgerufen werden. Die Anpresskräfte, welche auf das zur Vermessung herangezogene Drahtstück wirken, führen dabei zu einer Abnutzung der Drahtoberfläche, insbesondere bei Drähten, die aus einem relativ weichen Material bestehen, beispielsweise bei Aludrähten oder dergleichen. Diese Drähte können sich unter Druck verformen, sodass die durch die Antriebsrollen aufgebrachten Klemmkräfte zunehmend nachlassen. Durch die hohen Beschleunigungen und die Oberflächenabnutzung entsteht ein Schlupf zwischen dem zur Abtastung bzw. Vermessung verwendeten Drahtes und den Antriebsrollen, wodurch die Messergebnisse bei der Abtastung der Werkstückoberfläche des Werkstückes beeinträchtigt werden. Aufgrund des Verschleißes des zur Ausmessung bzw. Abtastung verwendeten Drahtstückes werden somit die Messergebnisse verfälscht bzw. beeinträchtigt.

Die JP 2007 090390 A beschreibt ein zum Verschweißen eines gewellten Werkstücks mit einem plattenförmigen Werkstück, wobei eine Kehlnaht zwischen den Werkstücken ausgebildet wird, indem zwei Schweißbrenner von einem gemeinsamen Startpunkt in entgegengesetzte Richtungen bewegt werden. Zur Korrektur von Fehler der Koordinatenachse der Schweißbrenner wird eine Stelle jeweils durch die beiden Schweißroboter abgetastet.

Die US 20020011474 A1 beschreibt ein Kurzschlussschweißverfahren, wobei ein Kontakt zwischen Schweißdrahtelektrode und Werkstück detektiert wird.

Es ist daher eine Aufgabe der vorliegenden Erfindung, ein Verfahren und eine Vorrichtung zur Abtastung einer Werkstückoberfläche eines Werkstückes zu schaffen, bei der die Messgenauigkeit erhöht wird.

Diese Aufgabe wird erfindungsgemäß durch ein Verfahren mit den in Patentanspruch 1 angegebenen Merkmalen sowie durch eine Abtastvorrichtung mit den in Patentanspruch 17 angegebenen Merkmalen gelöst.

Die Erfindung schafft demnach gemäß einem ersten Aspekt ein Verfahren zum Abtasten einer Werkstückoberfläche eines metallischen Werkstückes, bei dem ein Schweißbrenner mit einer Schweißdrahtelektrode zur Bestimmung von Abtastwerten relativ zur Werkstückoberfläche bewegt und ein Drahtende der Schweißdrahtelektrode wiederkehrend zu der Werkstückoberfläche hinbewegt wird, bis jeweils ein Kontakt mit dem metallischen Werkstück an einer Abtastposition auf der Werkstückoberfläche des metallischen Werkstückes detektiert wird und das Drahtende der Schweißdrahtelektrode anschließend zurückbewegt wird, wobei durch den Schweißbrenner Abtastwerte an Abtastpositionen zumindest teilweise mehrfach zur Ermittlung von Abtastmessfehlern erfasst werden.

Bei einer möglichen Ausführungsform des erfindungsgemäßen Verfahrens ragt das Drahtende der Schweißdrahtelektrode aus dem Schweißbrenner heraus und wird mit einem einstellbaren Bewegungsprofil und/oder einer einstellbaren Bewegungsfrequenz hin- und zurückbewegt.

Bei einer weiteren möglichen Ausführungsform des erfindungsgemäßen Verfahrens wird der Schweißbrenner mit der Schweißdrahtelektrode auf einer Abtastspur relativ zur Werkstückoberfläche des metallischen Werkstückes zur Bestimmung erster Abtastwerte an Abtastpositionen und anschließend auf der gleichen Abtastspur zur Bestimmung zweiter Abtastwerte an den Abtastpositionen bewegt.

Bei einer möglichen Ausführungsform des erfindungsgemäßen Verfahrens werden die entlang der Abtastspur bestimmten ersten Abtastwerte und die entlang der Abtastspur bestimmten zweiten Abtastwerte zur Ermittlung von Abtastmessfehlern verglichen.

Bei einer weiteren möglichen Ausführungsform des erfindungsgemäßen Verfahrens wird die Schweißdrahtelektrode durch Antriebsrollen zur Reduzierung von Abtastmessfehlern in Abhängigkeit der ermittelten Abtastmessfehler befördert.

Bei einer weiteren möglichen Ausführungsform des erfindungsgemäßen Verfahrens wird eine Bewegung der Schweißdrahtelektrode zur Überwachung einer durch Antriebsrollen auf die Schweißdrahtelektrode an einer Andruckstelle einer Drahtoberfläche der Schweißdrahtelektrode erfolgten Kraftübertragung erfasst.

Bei einer weiteren möglichen Ausführungsform des erfindungsgemäßen Verfahrens wird auf Grundlage der erfassten Drahtbewegung der Schweißdrahtelektrode eine durch die Antriebsrollen bewirkte Oberflächenabnutzung an der Andruckstelle der Drahtoberfläche der Schweißdrahtelektrode automatisch detektiert und die Schweißdrahtelektrode zur Reduzierung von hierdurch hervorgerufenen Abtastmessfehlern durch die Antriebsrollen zu einer anderen Andruckstelle befördert. Dies kann durch eine Änderung der Distanz zwischen Schweißbrenner und Werkstückoberfläche erreicht werden. Ebenso kann die Schweißdrahtelektrode weiter aus dem Schweißbrenner herausbefördert und abgeschnitten werden.

Bei einer weiteren möglichen Ausführungsform des erfindungsgemäßen Verfahrens werden die zur Beförderung der Schweißdrahtelektrode vorgesehenen Antriebsrollen durch einen Elektromotor angetrieben, dessen Motordrehzahl und/oder dessen Motorstromsignal zur Erfassung der Drahtbewegung der Schweißdrahtelektrode überwacht wird.

Bei einer weiteren möglichen Ausführungsform des erfindungsgemäßen Verfahrens wird ein durch die Antriebsrollen an einer Andruckstelle der Schweißdrahtelektrode bewirkte Oberflächenabnutzung der Drahtoberfläche der Schweißdrahtelektrode anhand eines markanten Rauschens in einem Motordrehzahlsignal und/oder in dem Motorstromsignal detektiert.

Bei einer weiteren möglichen Ausführungsform des erfindungsgemäßen Verfahrens wird nach Ablauf einer vorgegebenen Abtastbetriebszeit, nach Erreichen einer vorgegebenen Abtaststrecke und/oder nach Erreichen einer vorgegebenen Anzahl von Abtastwerten die aus dem Schweißbrenner herausragende Schweißdrahtelektrode, die zur Abtastung der Werkstückoberfläche verwendet wird, um eine vorgegebene Länge aus dem Schweißbrenner herausbefördert und abgeschnitten.

Bei einer weiteren möglichen Ausführungsform des erfindungsgemäßen Verfahrens wird nach Detektion einer Oberflächenabnutzung der Drahtoberfläche der Schweißdrahtelektrode die aus dem Schweißbrenner herausragende Schweißdrahtelektrode, die zur Abtastung der Werkstückoberfläche verwendet wird, um eine vorgegebene Länge aus dem Schweißbrenner herausbefördert und abgeschnitten.

Bei einer weiteren möglichen Ausführungsform des erfindungsgemäßen Verfahrens wird ein mechanischer Kontakt des Drahtendes der Schweißdrahtelektrode mit der Werkstückoberfläche des Werkstückes elektrisch erfasst.

Bei einer weiteren möglichen Ausführungsform des erfindungsgemäßen Verfahrens wird eine mechanische Kontaktierung der Werkstückoberfläche durch das Drahtende der Schweißdrahtelektrode durch Auswertung eines Motordrehzahlsignals und/oder eines Motorstromsignals des für den Antrieb der Antriebsrollen vorgesehenen Elektromotors detektiert.

Bei einer weiteren möglichen Ausführungsform des erfindungsgemäßen Verfahrens wird ein Bewegungsprofil und/oder eine Bewegungsfrequenz der Schweißdrahtelektrode in Abhängigkeit eines Materials der Schweißdrahtelektrode eingestellt.

Bei einer weiteren möglichen Ausführungsform des erfindungsgemäßen Verfahrens bildet das Drahtende der Schweißdrahtelektrode einen Werkzeugbezugspunkt, der mittels eines Kalibrierkörpers zur Reduzierung von Abtastmessfehlern kalibriert wird.

Bei einer weiteren möglichen Ausführungsform des erfindungsgemäßen Verfahrens wird die an dem Drahtende der Schweißdrahtelektrode anliegende elektrische Spannung vor der Abtastung der Werkstückoberfläche auf einen definierten Wert eingestellt und während der Abtastung der Werkstückoberfläche des Werkstückes die elektrische Spannung ungeregelt an dem Drahtende der Schweißdrahtelektrode angelegt, sodass nach Detektion eines elektrischen Kontaktes des Drahtendes mit der Werkstückoberfläche durch den aufgrund eines elektrischen Kurzschlusses fließenden elektrischen Strom (I) die thermische Belastung der Schweißdrahtelektrode gering gehalten wird. Die geringe thermische Belastung bei elektrischem Kurzschluss kann durch einen hohen Innenwiderstand der ungeregelten Spannungsquelle erreicht werden.

Die Erfindung schafft ferner gemäß einem weiteren Aspekt eine Abtastvorrichtung für ein Schweißgerät zur Abtastung einer Werkstückoberfläche eines metallischen Werkstückes, wobei die Abtastvorrichtung geeignet ist, zur Bestimmung von Abtastwerten einen Schweißbrenner mit einer Schweißdrahtelektrode relativ zu der abzutastenden Werkstückoberfläche des Werkstückes zu bewegen und dabei ein Drahtende der Schweißdrahtelektrode bezüglich der Werkstückoberfläche wiederkehrend zunächst hinzubewegen, bis jeweils ein Kontakt mit dem metallischen Werkstück an einer Abtastposition auf der Werkstückoberfläche des metallischen Werkstückes detektiert wird und anschließend das Drahtende der Schweißdrahtelektrode zurückzubewegen, wobei durch den Schweißbrenner Abtastwerte an Abtastpositionen auf der Werkstückoberfläche des metallischen Werkstückes zumindest teilweise mehrfach zur automatischen Ermittlung von Abtastmessfehlern erfasst werden.

Im Folgenden werden mögliche Ausführungsformen des erfindungsgemäßen Verfahrens und der erfindungsgemäßen Vorrichtung zum Abtasten einer Werkstückoberfläche eines metallischen Werkstückes unter Bezugnahme auf die beigefügten Figuren detailliert beschrieben.

Es zeigen:

Fig. 1    eine schematische Darstellung einer möglichen Ausführungsform einer erfindungsgemäßen Abtastvorrichtung zur Abtastung einer Werkstückoberfläche;

Fig. 2    eine weitere schematische Darstellung zur Erläuterung der Funktionsweise eines erfindungsgemäßen Verfahrens zum Abtasten einer Werkstückoberfläche;

Fig. 3, 4    schematische Darstellungen möglicher exemplarischer Abtastspuren, die bei dem erfindungsgemäßen Verfahren zum Abtasten einer Werkstückoberfläche verwendet werden können;

Fig. 5 eine Darstellung eines Ausführungsbeispiels eines Schweißgerätes, bei dem das erfindungsgemäße Verfahren zum Abtasten einer Werkstückoberfläche eingesetzt werden kann;

Fig. 6 eine schematische Darstellung zur Erläuterung eines Kalibriervorganges, der bei einer möglichen Ausführungsform des erfindungsgemäßen Verfahrens vorgenommen werden kann.

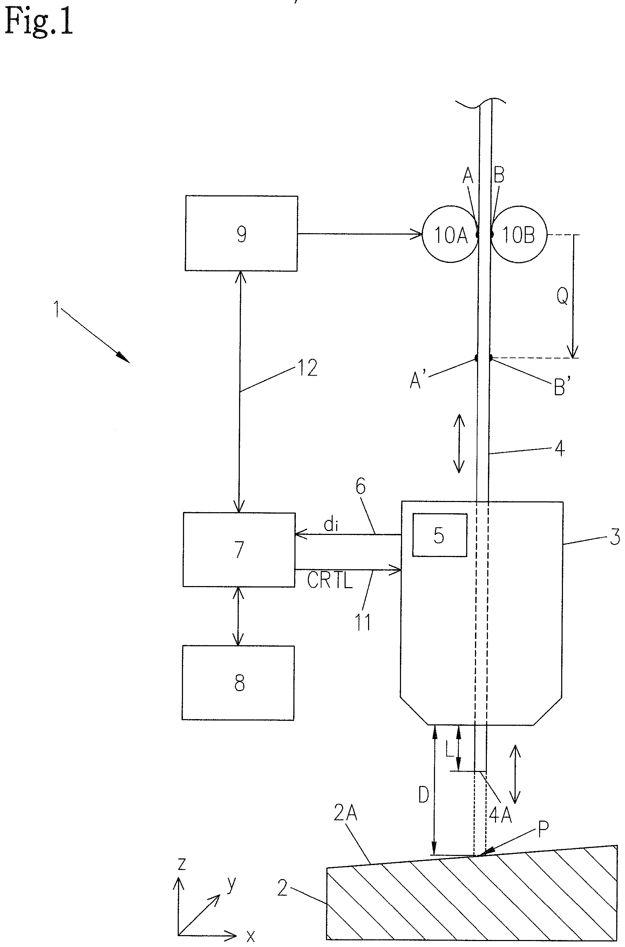

Fig. 1 zeigt eine mögliche Ausführungsform einer erfindungsgemäßen Abtastvorrichtung 1 zur Abtastung einer Werkstückoberfläche. Die in Fig. 1 dargestellte Abtastvorrichtung 1 kann zur Abtastung einer Werkstückoberfläche 2A eines metallischen Werkstückes 2 eingesetzt werden. Bei einer möglichen Ausführungsform wird die erfindungsgemäße Abtastvorrichtung 1 in einem Schweißgerät eingesetzt. Dieses Schweißgerät weist einen Schweißbrenner 3 auf. Diesem Schweißbrenner 3 wird eine Schweißdrahtelektrode 4 zugeführt. Die Abtastvorrichtung 1 ist geeignet, den Schweißbrenner 3 der Schweißdrahtelektrode 4 zur Bestimmung von Abtastwerten relativ zu der Werkstückoberfläche 2A des Werkstückes 2 zu bewegen, wobei ein Drahtende 4A der Schweißdrahtelektrode 4 wiederkehrend zu der Werkstückoberfläche 2A des Werkstückes hinbewegt wird, bis jeweils ein Kontakt mit dem metallischen Werkstück 2 an einer Abtastposition auf der Werkstücküberfläche 2A des metallischen Werkstückes 2 detektiert wird und wobei das Drahtende 4A der Schweißdrahtelektrode 4 anschließend zurückbewegt wird. Besonders geeignet für eine derartige Abtastvorrichtung ist ein Schweißbrenner mit Push/Pull Antrieb zur Durchführung der Hin- und Zurückbewegung der Schweißdrahtelektrode 4. Dabei werden Abtastwerte d an Abtastpositionen P zumindest teilweise mehrfach zur Ermittlung von Abtastmessfehlern automatisch erfasst. Wie man in Fig. 1 erkennen kann, ragt die zugeführte Schweißelektrode 4 aus dem Schweißbrenner 3 bis zum Drahtende 4A mit einer Stick-out-Länge L heraus. Der Abstand zwischen Schweißbrenner 3 und der Werkstückoberfläche 2A des Werkstückes 2 ist der Abstand bzw. die Distanz D, wie in Fig. 1 erkennbar. Gemäß dem in Fig. 1 ebenfalls dargestellten Koordinatensystem wird die Schweißdrahtelektrode 4 im Wesentlichen in z-Richtung, d.h. im Wesentlichen rechtwinklig zur Werkstückoberfläche 2A des Werkstückes 2, hin- und zurückbewegt. Durch die im Wesentlichen rechtwinklige Bewegungsrichtung der Schweißdrahtelektrode 4 zur Werkstückoberfläche 2A kann ein Verbiegen des Drahtes minimiert werden. Dennoch sind auch andere Bewegungsrichtungen der Schweißdrahtelektrode 4 durch Schwenken des Schweißbrenners 3 einstellbar. Das Drahtende 4A der Schweißdrahtelektrode 4 wird bezüglich der Werkstückoberfläche 2A wiederkehrend zunächst hin auf die Werkstückoberfläche 2A zubewegt, bis ein Kontakt mit dem metallischen Werkstück 2 an einer bestimmten Abtastposition detektiert wird, und anschließend wird das Drahtende 4A der Schweißdrahtelektrode 4 weg von der Werkstückoberfläche 2A zurückbewegt. Der Schweißbrenner 3 erfasst dabei Abtastwerte d an Abtastpositionen P auf der Werkstückoberfläche 2A des metallischen Werkstückes 2 mehrfach zur automatischen Ermittlung von Abtastmessfehlern. Die Abtastwerte d geben ein Oberflächenprofil der Werkstückoberfläche 2A an. Zur Ermittlung von Absolut-Positionen des Oberflächenprofils muss die Stick-Out Länge L vor Beginn des Abtastvorgangs bekannt sein. Dies kann beispielsweise über eine Kalibrierungsvorrichtung, welche die Schweißdrahtelektrode 4 in einem definierten Abstand zum Schweißbrenner 3 abschneidet, erreicht werden. Bei bekanntem Stick-Out zu Beginn des Abtastvorgangs können aufgrund des Bewegungsprofils der Schweißdrahtelektrode 3 und der Erkennung des Kontakts der Schweißdrahtelektrode 3 mit der Werkstückoberfläche die Abtastwerte d ermittelt werden. Mithilfe der bekannten Absolut-Position des Schweißbrenners 3 kann dann das Oberflächenprofil der Werkstückoberfläche 2A erstellt werden. Ist die Stick-Out Länge L nicht bekannt bzw. werden keine Absolutpositionen der Oberfläche benötigt, können Relativposition vom ersten Abtastpunkt aus ermittelt werden. Das Drahtende 4A der Schweißdrahtelektrode 4 ragt aus dem Schweißbrenner 3 heraus und wird mit einem einstellbaren Bewegungsprofil und/oder einer einstellbaren Bewegungsfrequenz hin- und zurückbewegt, d.h. im Wesentlichen in z-Richtung, wie in Fig. 1 schematisch angedeutet.

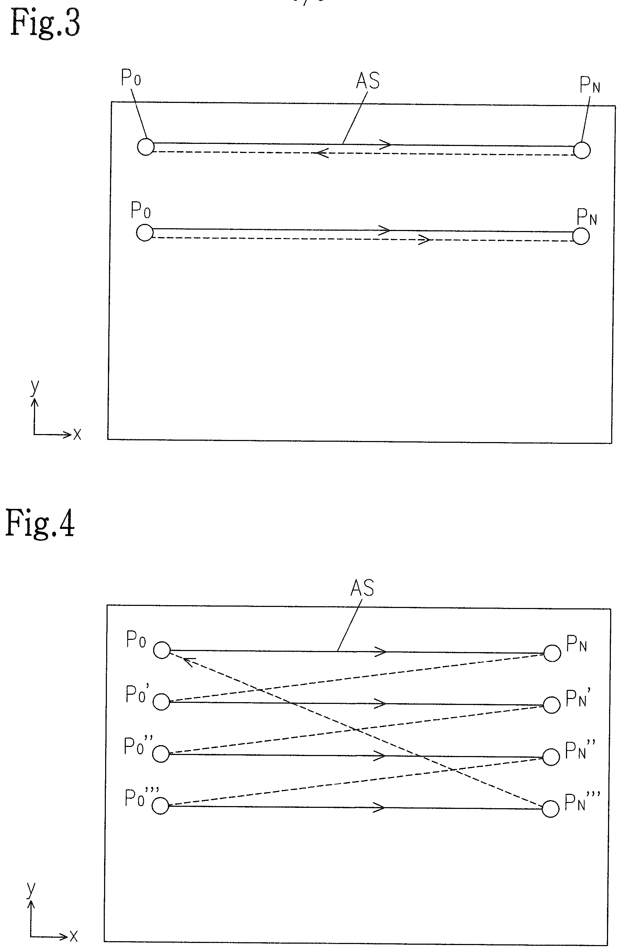

Der Schweißbrenner 3 des Schweißgerätes wird mit der sich hin- und herbewegenden Schweißdrahtelektrode 4 auf einer Abtastspur AS relativ zu der Werkstückoberfläche 2A des metallischen Werkstückes 2 zur Bestimmung erster Abtastwerte $d_1$ an Abtastpositionen P und anschließend zur Bestimmung zweiter Abtastwerte $d_2$ an den gleichen Abtastpositionen P bewegt. Beispielhafte Abtastspuren AS sind in den Figuren 3, 4 dargestellt. Die entlang der Abtastspur bestimmten ersten Abtastwerte $d_i$ und die entlang der Abtastspur bestimmten zweiten Abtastwerte $d_i'$, die an den gleichen Abtastpositionen erfasst werden, werden bei einer möglichen Ausführungsform zur Ermittlung von Abtastmessfehlern $\Delta d$ verglichen. Wie in Fig. 1 dargestellt, kann in dem Schweißbrenner 3 eine Messeinrichtung 5 enthalten sein, die Abtastwerte $d_i$ über eine Signalleitung 6 an einen Prozessor bzw. eine Berechnungseinheit 7 liefert. Die Berechnungseinheit 7 hat Zugriff auf einen Datenspeicher 8, in dem die Abtastwerte $d_i$ gespeichert werden können. Bei einer möglichen Ausführungsform werden die erhaltenen Abtastwerte $d_i$ zusammen mit den Koordinaten der Abtastpositionen P in dem Datenspeicher 8 zur weiteren Datenverarbeitung gespeichert.

Die Berechnungseinheit 7 dient bei einer möglichen Ausführungsform auch als Steuereinheit für einen Elektromotor 9, welcher Antriebsrollen 10A, 10B antreibt. An Andruckstellen A, B erfolgt durch die rotierenden Antriebsrollen 10A, 10B eine Kraftübertragung auf die Schweißdrahtelektrode 4, welche entsprechend in Längsrichtung bewegt wird. Die Steuereinrichtung 7 steuert ferner über Steuerleitungen 11 die Bewegung des Schweißbrenners 3. Dabei kann die Bewegung des Schweißbrenners 3 bei einer möglichen Ausführungsform entsprechend einer programmierten Abtastspur AS erfolgen.

Der Schweißbrenner 3 wird relativ zu der Werkstückoberfläche 2A des Werkstückes 2 bewegt. Dabei kann bei einer möglichen Ausführungsform das Werkstück 2 fest eingespannt sein und der Schweißbrenner 3 wird entsprechend der programmierten Abtastspur AS relativ zu der Werkstückoberfläche 2A bewegt. Bei einer alternativen Ausführungsform bleibt der Schweißbrenner 3 unbewegt während das eingespannte Werkstück 2 relativ zu dem Schweißbrenner 3 bewegt wird. Bei einer weiteren möglichen Ausführungsform werden sowohl der Schweißbrenner 3 als auch das Werkstück 2 angesteuert, um eine Relativbewegung zwischen dem Schweißbrenner 3 und der Werkstückoberfläche 2A des Werkstückes 2 zu bewirken.

Bei einer möglichen Ausführungsform wird ein Bewegungsprofil und/oder eine Bewegungsfrequenz der Hin- und Zurückbewegung der Schweißdrahtelektrode 4 durch die Antriebsrollen 10A, 10B zur Reduzierung von Abtastmessfehlern Δd in Abhängigkeit der durch die Berechnungseinheit 7 berechneten Abtastmessfehler automatisch angepasst. Insbesondere wird durch die Anpassung des Bewegungsprofils und/oder der Bewegungsfrequenz bei Abtastmessfehlern der maximale Betrag der Beschleunigung der Schweißdrahtelektrode 4 reduziert. Bei einer möglichen Ausführungsform wird eine Bewegung der Schweißdrahtelektrode 4 zur Überwachung einer durch die Antriebsrollen 10A, 10B auf die Schweißdrahtelektrode 4 an Andruckstellen A, B einer Drahtoberfläche der Schweißdrahtelektrode 4 erfolgten Kraftübertragung erfasst. Auf Grundlage der erfassten Drahtbewegung der Schweißdrahtelektrode 4 wird eine durch die Antriebsrollen 10A, 10B bewirkte Oberflächenabnutzung an den Andruckstellen A, B der Drahtoberfläche der Schweißdrahtelektrode 4 automatisch detektiert und die Schweißdrahtelektrode 4 wird zur Reduzierung von hierdurch hervorgerufenen Abtastmessfehlern durch die Antriebsrollen 10A, 10B bei einer anderen Andruckstelle befördert. Hierbei wird der Elektromotor 9 für den Antrieb der Antriebsrollen 10A, 10B entsprechend durch die Berechnungs- bzw. Steuereinheit 7 der Abtastvorrichtung 1 über Steuerleitungen 12 angesteuert. Die zur Beförderung der Schweißdrahtelektrode 4 vorgesehenen Antriebsrollen 10A, 10B werden durch den Elektromotor 9 angetrieben, wobei bei einer möglichen Ausführungsform dessen Motordrehzahl und/oder dessen Motorstromsignal zur Erfassung der Drahtbewegung der Schweißdrahtelektrode 4 seitens der Steuereinheit 7 überwacht wird. Bei einer möglichen Ausführungsform wird eine durch die Antriebsrollen 10A, 10B an Andruckstellen A, B der Schweißdrahtelektrode 4 bewirkte Oberflächenabnutzung der Drahtoberfläche der Schweißdrahtelektrode 4 anhand eines markanten Rauschens in einem Motordrehzahlsignal oder einem Motorstromsignal des Elektromotors 9 detektiert. Eine Abnutzung der Drahtoberfläche der Schweißdrahtelektrode 4 kann zu einer zeitweisen Reduzierung der Antriebskraft führen. Wenn dieser Zustand eintritt, kommt es zu einem markanten Rauschen auf dem Drehzahlsignal bzw. Stromsignal des elektrischen Antriebs 9, da sich die Beschleunigungs- und Bauteilkontaktkräfte plötzlich ändern. Diese Änderung des Motordrehzahlsignals bzw. des Motorstromsignals des Elektromotors 9 wird bei einer möglichen Ausführungsform durch die Steuereinheit 7 detektiert. Das detektierte markante Rauschen in dem Motordrehzahlsignal und/oder in dem Motorstromsignal weist auf eine Oberflächenabnutzung des Schweißdrahtes 4 an den Andruckstellen A, B hin. Bei einer möglichen Ausführungsform wird nach Detektion einer Oberflächenabnutzung der Drahtoberfläche der Schweißdrahtelektrode 4 die aus dem Schweißbrenner 3 herausragende Schweißdrahtelektrode 4, die zur Abtastung der Werkstückoberfläche 2A verwendet wird, um eine vorgegebene Länge Q aus dem Schweißbrenner 3 automatisch weiter herausbefördert und anschließend abgeschnitten. Alternativ ist eine Erhöhung des Abstands zwischen Schweißbrenner 3 und Werkstückoberfläche 2A möglich. So kann beispielsweise entlang einer Abtastspur AS der Abstand zwischen Schweißbrenner 3 und Werkstückoberfläche 2A kontinuierlich vergrößert oder verkleinert werden, um mit den Antriebsrollen 10A, 10B an unterschiedlichen Stellen A, B die Drahtelektrode zu fördern. Wie in Fig. 1 schematisch angedeutet, wird beispielsweise der Schweißdraht 4 nach Erkennung einer Oberflächenabnutzung der Schweißdrahtelektrode 4 an den Andruckstellen A, B um eine Länge Q vorwärts bewegt, sodass sich die abgenutzten Stellen bzw. Andruckstellen A, B zur Beförderung an den Stellen A', B' befinden, wie in Fig. 1 dargestellt. An den Andruckstellen A, B befindet sich nach der Beförderung eine unverbrauchte Oberfläche der Schweißdrahtelektrode 4. Diese nicht abgenutzte Oberfläche der Schweißdrahtelektrode 4 vermindert den Schlupf zwischen den Antriebsrollen 10A, 10B und der Schweißdrahtelektrode 4 und erhöht somit die Präzision bzw. Genauigkeit bei der Bestimmung der Abtastwerte $d_i$.

Bei einer weiteren möglichen Ausführungsform der erfindungsgemäßen Abtastvorrichtung 1 wird nach Ablauf einer vorgegebenen Abtastbetriebszeit, nach Erreichen einer vorgegebenen Abtaststrecke und/oder nach Erreichen einer vorgegebenen Anzahl von Abtastwerten die aus dem Schweißbrenner 3 herausragende Schweißdrahtelektrode 4, die zur Abtastung der Werkstückoberfläche 2A des Werkstückes 2 verwendet wird, um eine vorgegebene Länge aus dem Schweißbrenner 3 herausbefördert und anschließend abgeschnitten. Bei dieser Ausführungsform wird somit regelmäßig die Andruckstelle zwischen der Schweißdrahtelektrode 4 und den Antriebsrollen 10A, 10B verändert, sodass es zu keiner übermäßigen Oberflächenabnutzung an der Drahtoberfläche der Schweißdrahtelektrode 4 kommen kann.

Die Antriebsrollen 10A, 10B zur Beförderung der Schweißdrahtelektrode 4 werden durch die Steuereinheit 7 derart angesteuert, dass ein möglicher Schlupf zwischen der Drahtoberfläche der Schweißdrahtelektrode 4 und der Antriebsrollen minimiert wird. Dies ist insbesondere bei Schweißdrahtelektroden 4 hilfreich, die aus einem relativ weichen Material bestehen, beispielsweise aus Aluminium. Bei einer möglichen Ausführungsform wird ein möglicher auftretender Schlupf detektiert, beispielsweise durch Auswertung des Motordrehzahlsignals und/oder durch Auswertung des Motorstromsignals des Elektromotors 9, welcher die Antriebsrollen 10A, 10B antreibt. Alternativ kann in regelmäßigen Abständen die Schweißdrahtelektrode 4 automatisch zu einer anderen Andruckstelle bewegt werden, um präventiv eine Abnutzung der Schweißdrahtoberfläche zu verhindern.

Bei einer weiteren möglichen Ausführungsform kann ein möglicher auftretender Schlupf auf Grundlage der ermittelten Abtastwerte $d_i$ detektiert werden. Werden beispielsweise an einer Abtastposition, bei der sich der Schweißbrenner 3 an bestimmten Koordinaten x, y der Werkstückoberfläche 2A des Werkstückes 2 befindet, stark variierende Abtastwerte d ermittelt, kann dies auf einen auftretenden Schlupf zwischen der Schweißdrahtelektrode 4 und den Antriebsrollen 10A, 10B zurückgeführt werden. Wird ein auftretender Schlupf auf diese Weise detektiert, kann die Schweißdrahtelektrode 4 automatisch zu einer anderen Andruckstelle bewegt werden und das überstehende Schweißdrahtende automatisch abgeschnitten werden, um die Messung an der betreffenden Abtastposition erneut vorzunehmen. Anschließend wird festgestellt, ob die zuvor aufgetretene Abtastwertvarianz, die auf den mechanischen Schlupf zurückgeführt worden ist, noch vorhanden ist oder nicht. Bei dieser Ausführungsvariante wird der mechanische Schlupf zwischen der Schweißdrahtelektrode 4 und den Antriebsrollen 10A, 10B somit durch Auswertung der Abtastwerte $d_i$ an einer Abtastposition P detektiert. Die erfindungsgemäße Abtastvorrichtung 1 besitzt bei einer möglichen Ausführungsform somit eine Vorrichtung zur Erkennung eines mechanischen Schlupfes zwischen der Schweißdrahtelektrode 4 und den Antriebsrollen 10A, 10B zur Beförderung der Schweißdrahtelektrode 4. Diese Erkennungsvorrichtung zur Detektion eines Schlupfes zwischen einer Schweißdrahtelektrode 4 und Antriebsrollen 10A, 10B beruht bei einer möglichen Ausführungsform auf der Auswertung eines Motordrehzahlsignals oder eines Motorstromsignals des Elektromotors 9, welcher die Antriebsrollen 10A, 10B antreibt. Bei einer alternativen Ausführungsform weist die Erkennungsvorrichtung zur Erkennung eines Schlupfes zwischen der Schweißdrahtelektrode 4 und den Antriebsrollen 10A, 10B eine Auswerteeinheit zur Auswertung von Abtastwerten an einer Abtastposition auf, wobei stark voneinander abweichende Abtastwerte an einer Abtastposition auf das Vorhandensein eines mechanischen Schlupfes hindeuten, welcher durch Verschleiß der Schweißdrahtelektrodenoberfläche hervorgerufen wird. Damit ein mechanischer Schlupf zwischen der zur Abtastung herangezogenen Schweißdrahtelektrode 4 und den Antriebsrollen 10A, 10B verhindert wird, kann präventiv der Schweißdraht 4A in regelmäßigen Abständen zu einer anderen Andruckstelle befördert werden.

Bei einer möglichen Ausführungsform der erfindungsgemäßen Abtastvorrichtung 1 wird ein Bewegungsprofil und/oder eine Bewegungsfrequenz der Schweißdrahtelektrode 4 in Abhängigkeit eines Materials der Schweißdrahtelektrode 4 eingestellt. Die Bewegungsfrequenz ist die Frequenz der Schweißdrahtelektrode 4 in z-Richtung, d.h. die Anzahl der Hin- und Herbewegungen relativ zu der Werkstückoberfläche 2A. Weiterhin wird die Schweißdrahtelektrodenspitze 4A entsprechend dem Bewegungsprofil entlang einer Abtastspur AS in x- und y-Richtung bewegt. Eine an dem Drahtende 4A der Schweißdrahtelektrode 4 anliegende elektrische Spannung U kann vor der Abtastung der Werkstückoberfläche 2A auf einen vordefinierten Wert eingestellt werden. Während der Abtastung der Werkstückoberfläche 2A des Werkstückes 2 liegt die elektrische Spannung U an dem Drahtende 4A der Schweißdrahtelektrode 4 an, sodass nach Detektion eines elektrischen Kontaktes des Drahtendes 4A mit der Werkstückoberfläche 2A des Werkstückes 2 durch den aufgrund eines elektrischen Kurzschlusses fließenden elektrischen Stromes I eine thermische Belastung der Schweißdrahtelektrode 4 verursacht wird.

Bei der Hin- und Herbewegung der Schweißdrahtelektrode 4 im Wesentlichen senkrecht zu der zu vermessenden Werkstückoberfläche 2A kommt es zu einem mechanischen Kontakt zwischen dem Drahtende 4A der Schweißdrahtelektrode 4 und der Werkstückoberfläche 2A. Dieser Kontakt wird bei einer bevorzugten Ausführungsform elektrisch detektiert. Da an der Schweißdrahtelektrode 4 eine elektrische Spannung U anliegt, führt der mechanische Kontakt zwischen dem Schweißdrahtende 4A und der Werkstückoberfläche 2A des metallischen Werkstückes 2 zugleich zu einem elektrischen Kontakt, der detektiert wird. Bei einer alternativen Ausführungsform kann der Kontakt zwischen dem Schweißdrahtende 4A der Schweißdrahtelektrode 4 und der Werkstückoberfläche 2A des Werkstückes 2 auch mechanisch detektiert werden. Dies kann beispielsweise über eine Auswertung der Drahtbewegung bzw. der auf die Antriebsrollen übertragenen Kräfte erfasst werden.

Um die thermische Belastung der Schweißdrahtelektrode 4 aufgrund des bei der elektrischen Detektion fließenden Stromes I so gering wie möglich zu halten, können bei einer möglichen Ausführungsform entsprechende Maßnahmen vorgenommen werden, insbesondere wenn die Stromquelle des Schweißgeräts zur Erzeugung der Abtastspannung mittels Pulsweitenmodulation verwendet wird. Zunächst wird festgestellt, ob das Schweißdrahtende 4A der Schweißdrahtelektrode 4 die Bauteiloberfläche bzw. die Werkstückoberfläche 2A des Werkstückes 2 berührt hat, d.h., es wird festgestellt, ob ein elektrischer Kontakt aufgetreten ist. Sobald ein Kontakt festgestellt worden ist, wird das Drahtende 4A der Schweißdrahtelektrode 4 so lange rückwärtsbefördert, bis der detektierte Kurzschluss aufgelöst ist. Nach Beendigung bzw. Auflösung des Kurzschlusses wird die Pulsweite des Strom- bzw. Spannungssignals auf 0 % reduziert und anschließend in regelmäßigen Zeitabständen erhöht, bis eine vorgegebene Spannung überschritten wird. Beispielsweise wird die Pulsweite alle 100 psec um 0,1 % erhöht, bis eine Spannung von beispielsweise 20 V erreicht wird. Die erreichte Pulsweite wird anschließend gespeichert und für den weiteren Prozess verwendet. Dieses Herantasten an die entsprechende Pulsweite kann aufgrund von Bauteiltoleranzen der Stromquelle des Schweißgeräts notwendig sein. Die Stromquelle des Schweißgeräts ist im Allgemeinen für hohe Leistungen ausgelegt und wird hier aber bei sehr geringen Leistungen eingesetzt, bei denen die erwähnten Bauteiltoleranzen bzw. Exemplarstreuungen einen deutlichen Einfluss auf die Ausgangsspannung haben. Diese minimale Pulsweite, welche eine durch die Steuereinheit detektierbare Spannung, vorzugsweise im Bereich von 5V bis 30V, erzeugt, wird eingestellt und während des Abtastvorgangs nicht mehr verändert. Aufgrund des Innenwiderstands der nun ungeregelten Strom- bzw. Spannungsquelle bricht bei Kurzschluss die Spannung ein und es wird nur ein geringer Stromfluss bewirkt. Durch diese Prozedur wird erreicht, dass eine minimale Pulsweite an dem Leistungsteil des Schweißgerätes eingestellt wird, um zu gewährleisten, dass während der Abtastung ein möglichst geringer elektrischer Strom I fließt und kein elektrischer Lichtbogen entstehen kann. Hierdurch wird die thermische Belastung der Schweißdrahtelektrode 4 so gering wie möglich gehalten und somit ein Verschleiß der Schweißdrahtelektrode 4 während der Abtastung reduziert. Die Einstellung der Pulsweite erfolgt dabei derart, dass ein elektrischer Kurzschluss zwischen dem Schweißdrahtende 4 der Schweißdrahtelektrode und der Werkstückoberfläche 2A des metallischen Werkstückes 2 noch sicher detektiert werden kann.

Bei einer weiteren möglichen Ausführungsform der erfindungsgemäßen Abtastvorrichtung 1 kann ein spezielles Drahtstück zur Abtastung verwendet werden, das eine verschleißfeste Oberfläche besitzt. Beispielsweise kann bei einer möglichen Ausführungsform ein Stahldraht zum Scannen bzw. zur Abtastung der Werkstückoberfläche 2A des Werkstückes 2 verwendet werden. Für den eigentlichen Schweißvorgang wird anschließend bei einer möglichen Ausführungsform eine Schweißdrahtelektrode verwendet, die aus einem anderen Material besteht, beispielsweise Aluminium oder dergleichen. Bei einer möglichen Ausführungsvariante des erfindungsgemäßen Schweißgerätes können dem Schweißbrenner 3 einerseits eine Schweißdrahtelektrode 4 für den Schweißvorgang und zusätzlich eine separate Abtastelektrode zur Vornahme von Abtastvorgängen zugeführt werden. Diese Abtastelektrode besteht beispielsweise aus einem verschleißfreien Stahldraht zum Scannen der Werkstückoberfläche 2A des Werkstückes 2. Bei einer bevorzugten Ausführungsform der Abtastvorrichtung 1 wird jedoch derselbe Draht bzw. dieselbe Elektrode 4 sowohl für den Abtastvorgang als auch für den Schweißvorgang verwendet.

Befindet sich auf der Werkstückoberfläche 2A des metallischen Werkstückes 2 eine isolierende Schicht, kann es vorkommen, dass ein elektrischer Kurzschluss zwischen dem Schweißdrahtende 4A und der Werkstückoberfläche 2A nicht detektiert wird, da die isolierende Schicht einen derartigen Kurzschluss verhindert. Um in diesem Falle zu verhindern, dass die Antriebsrollen 10A, 10B den Schweißdraht weiter an die Werkstückoberfläche 2A des Werkstückes 2 andrücken, kann bei einer möglichen Ausführungsform das Motordrehzahlsignal und/oder das Motorstromsignal des Elektromotors 9 überwacht werden. Bei einer weiteren möglichen Ausführungsform der erfindungsgemäßen Abtastvorrichtung 1 werden die Reglerparameter des Elektromotors 9 in Abhängigkeit von dem Material der eingespannten Schweißdrahtelektrode 4 angepasst bzw. eingestellt. Beispielsweise wird bei einer Schweißdrahtelektrode 4, die aus einem relativ weichen Material besteht, wie beispielsweise Aluminium, die Scanfrequenz bzw. Abtastfrequenz der Schweißdrahtelektrode 4 abgesenkt, um zu hohe Beschleunigungskräfte, welche zu einem übermäßigen Verschleiß der aus einem Weichmaterial bestehenden Schweißelektrode 4 führen, zu vermeiden. Durch die Verringerung der Beschleunigungskräfte aufgrund der gesenkten Scan- bzw. Abtastfrequenz kommt es zu einem reduzierten Verschleiß der Schweißdrahtelektrode 4 und somit auch zu einer Verringerung eines möglichen mechanischen Schlupfes zwischen der Oberfläche der Schweißdrahtelektrode 4 und den Antriebsrollen 10A, 10B der Abtastvorrichtung 1.

Bei einer möglichen Ausführungsform wird vor und nach einem Scan- bzw. Abtastvorgang der Schweißbrenner 3 an einer Abtastposition gestoppt und es wird geprüft, ob ein mechanischer Schlupf vorliegt. Bei einer möglichen Ausführungsform erfolgt das durch Auswertung der an der Abtastposition ermittelten Abtastwerte. Bei einer möglichen Ausführungsform wird der ermittelte Abtastfehler kompensiert bzw. der detektierte mechanische Schlupf korrigiert.

Bei einer weiteren möglichen Ausführungsform der erfindungsgemäßen Abtastvorrichtung 1 wird die Temperatur T der Schweißdrahtelektrode 4 überwacht. Bei einer möglichen Ausführungsform wird die Schweißdrahtelektrode 4 in Abhängigkeit von der überwachten Drahttemperatur gekühlt, um einen Verschleiß der Schweißdrahtelektrode 4 und/oder einen möglichen mechanischen Schlupf zu reduzieren. Bei einer weiteren möglichen Ausführungsvariante der erfindungsgemäßen Abtastvorrichtung 1 kann auch die Kraftübertragung auf die Schweißdrahtelektrode 4 überwacht werden, beispielsweise die mechanische Andruckskraft der Antriebsrollen 10A, 10B auf die Oberfläche der Schweißdrahtelektrode 4 an den Andruckstellen A, B.

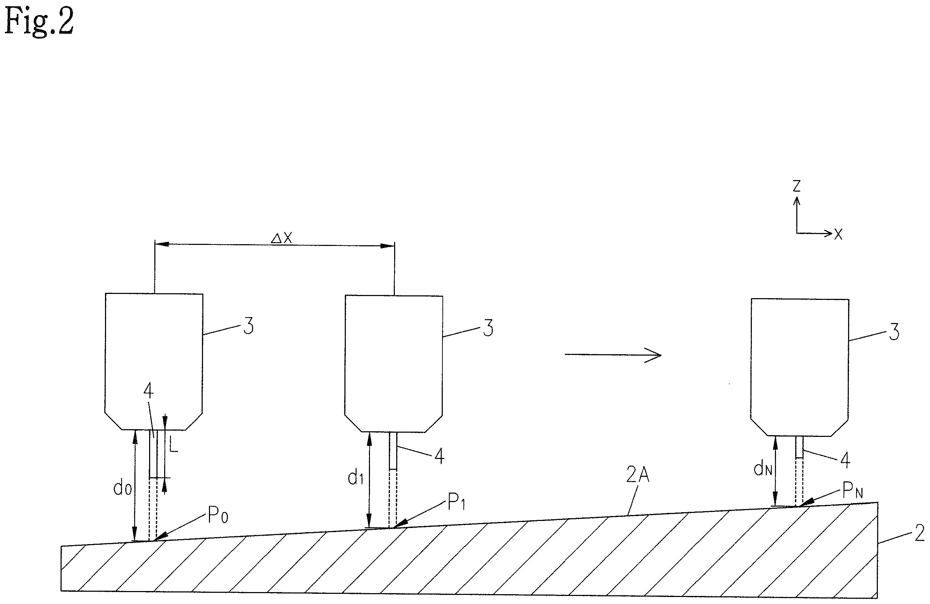

Fig. 2 zeigt schematisch das Abtasten einer Werkstückoberfläche 2A eines metallischen Werkstückes 2 mithilfe des erfindungsgemäßen Abtastverfahrens. Bei dem dargestellten Beispiel wird ein Schweißbrenner 3 mit einer darin geführten Schweißdrahtelektrode 4 zur Bestimmung von Abtastwerten d relativ zu der Werkstückoberfläche 2A des Werkstückes 2 bewegt. Der Schweißbrenner 3 wird in dem dargestellten Ausführungsbeispiel in x-Richtung relativ zu der leicht geneigten Werkstückoberfläche 2A des Werkstückes 2 bewegt. Dabei berührt die Schweißdrahtelektrodenspitze 4A der Schweißdrahtelektrode 4 in bestimmten Abständen $\Delta x$ die Oberfläche des Werkstückes 2. Die Berührung der Werkstückoberfläche 2A des Werkstückes 2 durch das Schweißdrahtende 4A der Schweißdrahtelektrode 4 kann beispielsweise anhand eines auftretenden elektrischen Kurzschlusses detektiert werden. Bei dem in Fig. 2 dargestellten Beispiel werden entlang der Werkstückoberfläche 2A Abtastwerte d0, d1, ... $d_n$ an verschiedenen Abtastpositionen in x-Richtung entlang einer Abtastspur AS detektiert und der Auswerteeinheit 7 der Abtastvorrichtung 1 zugeführt. Tritt kein mechanischer Schlupf zwischen der Schweißdrahtelektrode 4 und den Antriebsrollen 10A, 10B auf, entsprechen die Abtastwerte $d_i$ dem Abstand zwischen dem Schweißbrenner 3 und der Werkstückoberfläche 2A unter Berücksichtigung der Länge L, mit der die Schweißdrahtelektrode 4 aus dem Schweißbrenner 3 an der oberen Endposition herausragt. Durch mechanischen Schlupf kann es allerdings zu Messfehlern kommen. Zur Vermeidung dieser Abtastmessfehler wird der Schweißbrenner 3 bei dem erfindungsgemäßen Abtastverfahren zumindest teilweise mehrfach zu einer oder mehreren Abtastpositionen P bewegt, um dort Abtastwerte d zu erfassen. Durch den Schweißbrenner 3 werden Abtastwerte d an einer oder mehreren Abtastpositionen P zumindest teilweise mehrfach zur Ermittlung von Abtastfehlern erfasst, die beispielsweise durch mechanischen Schlupf hervorgerufen werden können. Beispielsweise wird in dem in Fig. 2 dargestellten einfachen Beispiel der Schweißbrenner 3 nach Bestimmung des Abtastwertes $d_N$ an der Abtastposition $P_N$ zurück an die Abtastposition $P_0$ zurückbewegt, um einen zweiten Abtastwert $d_0$' an der Abtastposition $P_0$ zu bestimmen. Der Schweißbrenner 3 wird mit der darin bewegten Schweißdrahtelektrode 4 gemäß einer Abtastspur AS relativ zu der Werkstückoberfläche 2A zur Bestimmung erster Abtastwerte $d_1$ an Abtastpositionen P und anschließend zur Bestimmung zweiter Abtastwerte $d_2$ an den gleichen Abtastpositionen P bewegt. Beispielsweise wird der Schweißbrenner 3 derart bewegt, dass er alle Abtastpositionen zweimal anfährt, um für jede Abtastposition P zwei Abtastwerte d,d' zu gewinnen. Die beiden an der gleichen Abtastposition P gewonnenen Abtastwerte d,d' werden miteinander verglichen, um einen Abtastmessfehler $\Delta d$ zu bestimmen. Beispielsweise wird der beim zweiten Anfahren der Abtastposition bestimmte zweite Abtastwert d' von dem beim ersten Anfahren der Abtastposition gewonnenen ersten Abtastwert d subtrahiert, um einen Abtastmessfehler $\Delta d$ zu berechnen.

$$\Delta d = d_i - d_i'$$

Die an den verschiedenen Abtastpositionen P berechneten Abtastmessfehler können bei einer möglichen Ausführungsform zur Erkennung und Korrektur eines mechanischen Schlupfes zwischen der Schweißdrahtelektrode 4 und den Antriebsrollen 10A, 10B herangezogen werden. Weiterhin können die ermittelten Abtastmessfehler zur Korrektur der Abtastwerte und somit zu einer präziseren Erfassung der Werkstückoberfläche 2A des Werkstückes 2 durch die Auswerteeinheit 7 ausgewertet werden. Durch die mehrfache Messung von $\Delta d$ kann über ein Modell des Schlupfes die Messgenauigkeit im Nachhinein verbessert werden. In einem einfachen Modell wird beispielsweise ein lineares Auftreten des Schlupfes angenommen. Nach der mehrfachen Abtastungen können auf Basis der zeitlichen Abfolge und dem Schlupfmodell die tatsächlichen Distanzen $d_i$ und die daraus folgende Oberflächengeometrie rückgerechnet werden.

Bei einer weiteren möglichen Ausführungsform des erfindungsgemäßen Verfahrens kann der Schweißbrenner 3 an eine Referenzabtastposition bewegt werden, bevor der eigentliche Abtastvorgang begonnen wird. An der Referenzabtastposition können anschließend Abtastwerte d ermittelt werden, um Abtastmessfehler zu erfassen.

Figuren 3, 4 zeigen beispielhaft mögliche Abtastspuren, die bei dem erfindungsgemäßen Verfahren zum Abtasten einer Werkstückoberfläche 2A eines metallischen Werkstückes 2 verwendet werden können. Bei dem in Fig. 3 dargestellten Beispiel wird bei der oberen Abtastspur der Schweißbrenner 3 entlang einer Linie von einer Anfangsabtastposition $P_0$ zu einer Endabtastposition $P_n$ bewegt, wobei das Drahtende 4A der Schweißdrahtelektrode 4 mit einer einstellbaren Bewegungsfrequenz f in z-Richtung hin- und zurückbewegt wird. Auf diese Weise können n + 1 Abtastwerte d0, d1, ... $d_N$ bestimmt werden. Nach Erreichen der Abtastposition $P_N$ kann der Schweißbrenner 3 gemäß der oberen Abtastspur in Fig. 3 entlang der gleichen Abtastspur zurückbewegt werden, bis er die Ausgangsabtastposition $P_0$ wieder erreicht hat. Die bei dem Abtasten ermittelten Abtastwerte d an verschiedenen Abtastpositionen P können paarweise in den Datenspeicher 8 der Abtastvorrichtung 1 zusammen mit den Koordinaten der Abtastpositionen P zwischengespeichert werden. Aus den Differenzen $\Delta d$ zwischen den Abtastwerten d, d', die an den gleichen Abtastpositionen P erfasst worden sind, können Abtastmessfehler abgeleitet werden.

Bei der zweiten in Fig. 3 dargestellten unteren Abtastspur AS wird der Schweißbrenner 3 aus der Anfangsabtastposition $P_0$ in die Endabtastposition $P_n$ linear

bewegt, um Abtastwerte $d_i$ zu ermitteln. Sobald die Endabtastposition $P_n$ erreicht wird, wird nach Erfassung des dortigen Abtastwertes der Schweißbrenner 3 zurück in die Ausgangsabtastposition $P_0$ bewegt und ein zweites Mal in gleicher Richtung entlang der Abtastspur zu der Endabtastposition $P_n$ bewegt. Bei diesem Abtastvorgang wird somit der Schweißbrenner 3 zweimal entlang der gleichen Abtastspur AS bewegt, um zwei Abtastwerte d, d' für jede Abtastposition P zu gewinnen und daraus Abtastmessfehler zu berechnen.

Die Anzahl der an der gleichen Abtastposition P gewonnenen Abtastwerte kann je nach Anwendungsfall variieren. Bei einer möglichen Ausführungsform werden mindestens zwei Abtastwerte an jeder Abtastposition P erfasst, um Abtastmessfehler zu ermitteln. Bei möglichen Anwendungsfällen können auch mehr Abtastwerte pro Abtastposition erfasst werden, um Abtastmessfehler präziser zu ermitteln. Bei einer weiteren möglichen Ausführungsform erfolgt die mehrfache Abtastung an einer Abtastposition nur stichprobenartig, um Abtastmessfehler, die beispielsweise durch den Verschleiß einer Schweißdrahtoberfläche hervorgerufen werden, zu detektieren.

Bei einer möglichen Ausführungsform werden die ermittelten Abtastmessfehler in dem Datenspeicher 8 aufgezeichnet. Die ermittelten Abtastmessfehler können bei einer möglichen Ausführungsform mit einem vorgegebenen bzw. vorkonfigurierten Schwellenwert verglichen werden. Sobald die Abtastmessfehler diesen Schwellenwert überschreiten, wird bei einer möglichen Ausführungsform die Schweißdrahtelektrode 4 zu einer anderen Andruckstelle automatisch bewegt, um einen möglicherweise aufgetretenen mechanischen Schlupf zu verringern. Nach der Beförderung der Schweißdrahtelektrode 4 zu einer anderen Andruckstelle können anschließend wieder Abtastmessfehler ermittelt werden, um festzustellen, ob die aufgetretene Messfehlerverfälschung beseitigt worden ist oder nicht.

Fig. 4 zeigt beispielhaft eine weitere mögliche Abtastspur AS, die bei dem erfindungsgemäßen Verfahren zum Abtasten einer Werkstückoberfläche 2A verwendet werden kann. Bei dem in Fig. 4 dargestellten Beispiel bewegt sich der Schweißbrenner 3 zunächst von einer Ausgangsabtastposition linear zu einer Endabtastposition $P_N$ und springt anschließend auf eine Abtastposition $P_0'$ für die nächste Abtastzeile. Nach Erreichen der Endposition $P_N'''$ in der letzten bzw. vierten Abtastzeile springt der Schweißbrenner 3 zurück zu der Ausgangsposition $P_0$ und die Werkstückoberfläche 2A wird ein zweites Mal abgetastet, um Abtastmessfehler zu ermitteln.

Je nach Anwendungsfall können verschiedene vorprogrammierte Abtastspuren AS verwendet werden, beispielsweise ein zeilenweises Abtasten wie in Fig. 4 oder andere Abtastspuren, insbesondere ein meanderförmiges Abtasten der Werkstückoberfläche 2A. Bei einer möglichen Ausführungsform kann die verwendete Abtastspur AS je nach Anwendungsfall ausgewählt werden. Neben dem Bewegungsprofil bzw. Abtastprofil AS kann auch die Bewegungsfrequenz f der Schweißdrahtelektrode 4 je nach Anwendungsfall eingestellt werden.

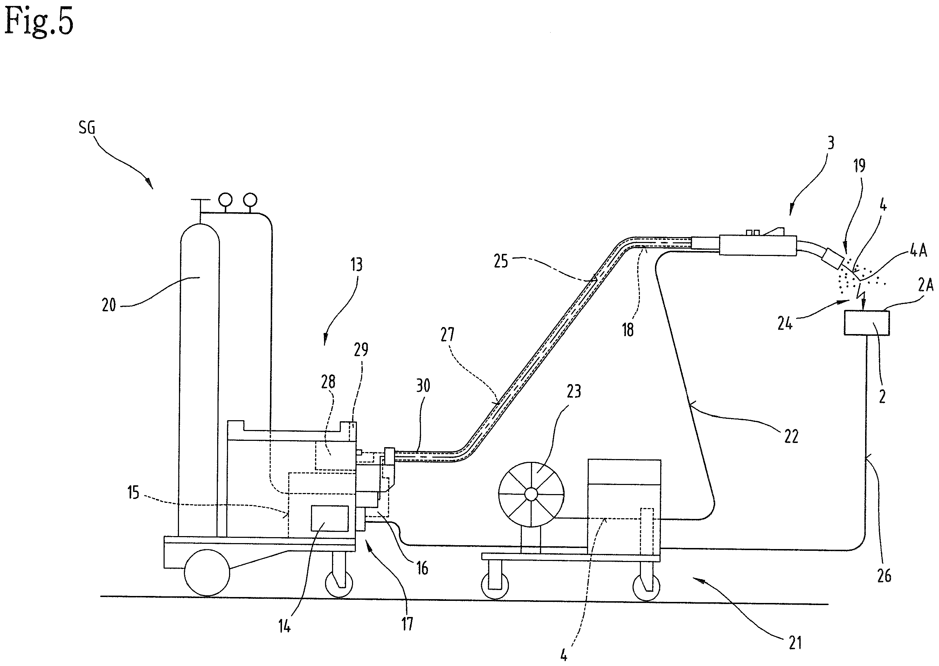

Fig. 5 zeigt ein Ausführungsbeispiel eines Schweißgerätes SG, bei dem das erfindungsgemäße Verfahren zum Abtasten einer Werkstückoberfläche 2A eines metallischen Werkstückes 2 verwendet werden kann.

Das in Fig. 5 dargestellte Schweißgerät SG besitzt eine Stromquelle 13 mit einem Leistungsteil 14. Die Stromquelle 13 enthält eine Steuervorrichtung 15 mit einem Steuerventil 16. Ein Umschaltglied 17 ist mit dem Steuerventil 16 verbunden. Dieses Steuerventil 16 ist in einer Versorgungsleitung 18 für ein Schutzgas 19 zwischen einem Gasspeicher 20 und einem Schweißbrenner 3 des Schweißgerätes SG angeordnet.

Das Schweißgerät SG enthält ein Drahtvorschubgerät 21, wobei über eine Versorgungsleitung 22 ein Schweißdraht 4 in einer Vorratstrommel 23 zugeführt werden kann, wie in Fig. 5 dargestellt.

In Fig. 5 ist schematisch einen Schweißvorgang nach Abschluss eines Abtastens der Werkstückoberfläche 2A dargestellt. Der in Fig. 5 dargestellte Schweißdraht bzw. die Schweißelektrode 4 besitzt ein Schweißdrahtende 4A, welches zum Abtasten der Werkstückoberfläche des Werkstückes 2 entsprechend dem erfindungsgemäßen Abtastverfahren hin- und herbewegt werden kann. Nach Abschluss des Abtastvorganges wird das Schweißgerät SG zum Schweißen verwendet. Dabei wird ein elektrischer Strom zum Aufbauen eines Lichtbogens 24 zwischen der Schweißdrahtelektrode 4 und dem Werkstück 2 über eine Schweißstromleitung 27 von dem Leistungsteil 14 der Stromquelle 13 dem Schweißbrenner 3 bzw. der Schweißdrahtelektrode 4 zugeführt. Dabei kann das zu verschweißende Werkstück 2 über eine weitere Schweißleitung 26 mit dem Schweißgerät SG, insbesondere mit dessen Stromquelle, verbunden sein, damit für den Lichtbogen 24 ein Stromkreis aufgebaut werden kann. Zum Kühlen des Schweißbrenners 3 kann über einen Kühlkreislauf 27 der Schweißbrenner 3 mit einem Flüssigkeitsbehälter 28 verbunden sein.

Das Schweißgerät SG weist bei dem dargestellten Ausführungsbeispiel eine Ein- und/oder Ausgabeeinrichtung 29 auf, über die unterschiedliche Schweißparameter und/oder Betriebsarten des Schweißgerätes SG eingestellt werden können. Bei dem in Fig. 5 dargestellten Ausführungsbeispiel ist der Schweißbrenner 3 über ein Schlauchpaket 30 mit dem Schweißgerät SG verbunden. In dem Schlauchpaket 30 können sich verschiedene Leitungen befinden, die das Schweißgerät SG mit dem Schweißbrenner 3 verbinden. Bei einer möglichen Ausführungsform befinden sich Komponenten der erfindungsgemäßen Abtastvorrichtung 1 einerseits in der Steuervorrichtung 15 der Schweißstromquelle 13 und andererseits in dem Drahtvorschubgerät 21 des Schweißgerätes SG. Bei einer möglichen Ausführungsform sind in dem Drahtvorschubgerät 21 der Elektromotor 9 und die Antriebsrollen 10A, 10B zur Bewegung der Schweißdrahtelektrode 4 vorgesehen. Die Auswerteeinheit 7 der Abtastvorrichtung 1 befindet sich bei einer möglichen Ausführungsform in der Steuereinheit 15 des Schweißgerätes SG. Der Schweißbrenner 3 meldet bei einer möglichen Ausführungsform lokal ermittelte Abtastwerte über eine Signalleitung 6, die beispielsweise in dem Schlauchpaket verläuft, an die Steuer- bzw. Auswerteeinheit 7 der Abtastvorrichtung 1. Die Steuereinheit 7 der Abtastvorrichtung 1 kann bei einer möglichen Ausführungsform die Bewegung des Schweißbrenners 3 des Schweißgerätes SG steuern. Hierzu kann sich der Schweißbrenner 3 in einem ansteuerbaren Roboterarm des Schweißgerätes SG bzw. der Schweißanlage befinden.

Das in Fig. 5 dargestellte Schweißgerät SG eignet sich nicht nur zum Schweißen, sondern auch zum Abtasten einer Werkstückoberfläche 2A des Werkstückes 2. Dieses Abtasten kann bei einer möglichen Ausführungsform vor Durchführung des eigentlichen Schweißvorganges vorgenommen werden. Bei einer möglichen Ausführungsform kann das Schweißgerät SG über die Ein- und Ausgabeeinrichtung 29 in einen Betriebsmodus zum Vornehmen eines Abtastens versetzt werden. In diesem Abtastbetriebsmodus des Schweißgerätes SG wird die Schweißdrahtelektrode 4 nicht zum Schweißen, sondern zum Abtasten des Werkstückes 2 verwendet.

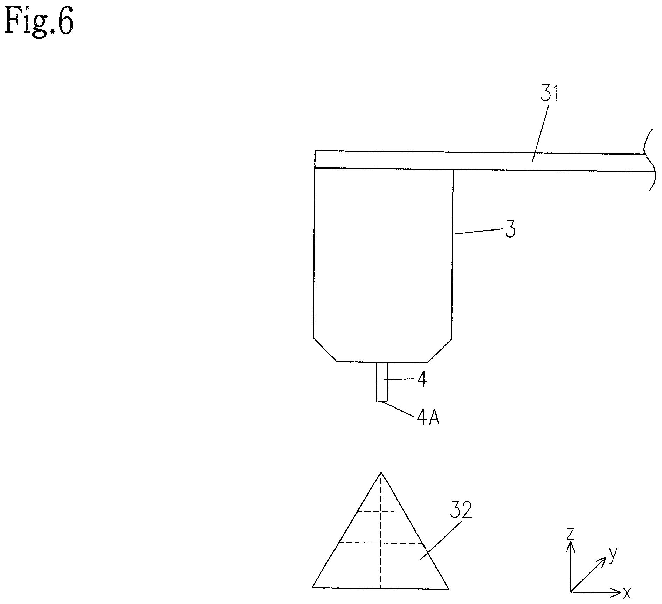

Der Schweißbrenner 3 befindet sich bei einer möglichen Ausführungsform an einem Roboterarm 31, wie in Fig. 6 schematisch dargestellt. Das Drahtende 4A der Schweißdrahtelektrode 4 bildet einen Werkzeugbezugspunkt TCP. Dieser Werkzeugbezugspunkt TCP kann wie in Fig. 6 dargestellt mittels eines Kalibrierkörpers 32 zur Reduzierung von Abtastmessfehlern kalibriert werden. Bei dem in Fig. 6 dargestellten Ausführungsbeispiel ist der Kalibrierkörper 32 konisch ausgebildet. Der in Fig. 6 dargestellte konische bzw. kegelförmige Kalibrierkörper 32 wird durch die Abtastvorrichtung 1 zur Kalibrierung des Werkzeugbezugspunktes TCP abgetastet. Beispielsweise wird der kegelförmige Abtastkörper 32 an verschiedenen Höhen Z entlang eines Kreises abgetastet. Bleibt die gemessene Höhe Z konstant, ist der Werkzeugbezugspunkt TCP korrekt kalibriert. Die Kalibrierung des Werkzeugbezugspunktes TCP erfolgt vorzugsweise an der Kalibrierfläche eines Referenz- bzw. Kalibrierkörpers 32. Die Kalibrierung wird vorzugsweise durchgeführt, bevor der Abtastvorgang zum Abtasten der Werkstückoberfläche 2A beginnt. Nach erfolgreicher Kalibrierung des Werkzeugbezugspunktes TCP erfolgt anschließend die Abtastung der Werkstückoberfläche 2A insbesondere eines metallischen Werkstückes 2. Mit dem erfindungsgemäßen Abtastverfahren kann die Bauteiloberfläche des Werkstückes 2 vermessen werden. Beispielsweise kann eine Lage eines bestimmten Werkstückes 2 genau bestimmt werden. Insbesondere bei bekannter Position des Kalibrierkörpers 32 kann die Absolutposition der Werkstückoberfläche 2A ermittelt werden, indem die Werkstückoberfläche 2A relativ zum Kalibrierkörper 32 bestimmt wird. Weiterhin kann auch die relative Lage bzw. Anordnung von zwei verschiedenen Werkstücken 2 zueinander bestimmt werden. Beispielsweise kann ein zwischen zwei zu verschweißenden Bauteilen bzw. Werkstücken 2 bestehender Hohlraum bzw. Spalt mit dem erfindungsgemäßen Abtastverfahren vermessen werden und anschließend die beiden Werkstücke an dieser Stelle miteinander verschweißt werden. Bei einem möglichen Anwendungsfall wird beispielsweise eine zwischen zwei Bauteilen bestehender Spalt vor Durchführung des Schweißvorganges abgetastet bzw. vermessen und anschließend in einem nachfolgenden Schweißprozess entsprechend den ermittelten Messdaten werden die beiden Bauteile miteinander verschweißt. Bei dem erfindungsgemäßen Abtastverfahren werden mögliche Abtastfehler erfasst und vorzugsweise ausgeglichen bzw. korrigiert. Hierdurch ist die Genauigkeit bei der Abtastung bzw. Vermessung der Werkstückoberfläche 2A und/oder von Hohlräumen zwischen Werkstücken 2 hoch, sodass auch die Qualität einer nachfolgend erzeugten Schweißverbindung erhöht werden kann. Mithilfe des erfindungsgemäßen Abtastverfahrens können beispielsweise Bauteiltoleranzen von Werkstücken 2 erkannt und ausgeglichen werden. Mit dem erfindungsgemäßen Verfahren wird der Verschleiß der beim Abtasten eingesetzten Schweißdrahtelektrode 4 minimiert und somit die Messergebnisse bei Vermessung des Werkstückes 2 verbessert. Weiterhin ist es möglich die beim Schweißvorgang entstehende Schweißnaht mit Hilfe der Abtastvorrichtung 1 abzutasten, um Informationen über deren Qualität zu erhalten.

**Patentansprüche**

1. Verfahren zum Abtasten einer Werkstückoberfläche (2A) eines metallischen Werkstückes (2), bei dem ein Schweißbrenner (3) mit einer Schweißdrahtelektrode (4) zur Bestimmung von Abtastwerten relativ zur Werkstückoberfläche (2A) bewegt **dadurch gekennzeichnet, dass** ein Drahtende (4A) der Schweißdrahtelektrode (4) wiederkehrend zu der Werkstückoberfläche (2A) hinbewegt wird, bis jeweils ein Kontakt mit dem metallischen Werkstück (2) an einer Abtastposition (P) auf der Werkstückoberfläche (2A) des metallischen Werkstückes (2) detektiert wird und das Drahtende (4A) der Schweißdrahtelektrode (4) anschließend zurückbewegt wird, wobei durch den Schweißbrenner (3) Abtastwerte (d) an Abtastpositionen (P) zumindest teilweise mehrfach zur Ermittlung von Abtastmessfehlern erfasst werden.

2. Verfahren nach Anspruch 1, wobei das Drahtende (4A) der Schweißdrahtelektrode (4) aus dem Schweißbrenner (3) herausragt und mit einem einstellbaren Bewegungsprofil und/oder einer einstellbaren Bewegungsfrequenz hin- und zurückbewegt wird.

3. Verfahren nach Anspruch 1 oder 2, wobei der Schweißbrenner (3) mit der Schweißdrahtelektrode (4) auf einer Abtastspur relativ zur Werkstückoberfläche (2A) des metallischen Werkstückes (2) zur Bestimmung erster Abtastwerte an Abtastpositionen und anschließend auf der gleichen Abtastspur zur Bestimmung zweiter Abtastwerte an den Abtastpositionen bewegt wird.

4. Verfahren nach Anspruch 3, wobei die entlang der Abtastspur bestimmten ersten Abtastwerte (d) und die entlang der Abtastspur bestimmten zweiten Abtastwerte (d') zur Ermittlung von Abtastmessfehlern verglichen werden.

5. Verfahren nach einem der vorangehenden Ansprüche 1 bis 4, wobei die Schweißdrahtelektrode (4) durch Antriebsrollen (10A, 10B) zur Reduzierung von Abtastmessfehlern in Abhängigkeit der ermittelten Abtastmessfehler ein Bewegungsprofil und/oder eine Bewegungsfrequenz der Schweißdrahtelektrode angepasst wird.

6. Verfahren nach einem der vorangehenden Ansprüche 1 bis 5, wobei eine Bewegung der Schweißdrahtelektrode (4) zur Überwachung einer durch Antriebsrollen (10A, 10B) auf die Schweißdrahtelektrode (4) an einer Andruckstelle einer Drahtoberfläche der Schweißdrahtelektrode (4) erfolgten Kraftübertragung erfasst wird.

7. Verfahren nach Anspruch 6, wobei auf Grundlage der erfassten Drahtbewegung der Schweißdrahtelektrode (4) eine durch die Antriebsrollen (10A, 10B) bewirkte Oberflächenabnutzung an der Andruckstelle der Drahtoberfläche der Schweißdrahtelektrode (4) automatisch detektiert wird und die Schweißdrahtelektrode (4) zur Reduzierung von hierdurch hervorgerufenen Abtastmessfehlern durch die Antriebsrollen (10A, 10B) zu einer anderen Andruckstelle befördert wird.

8. Verfahren nach einem der vorangehenden Ansprüche, wobei die zur Beförderung der Schweißdrahtelektrode (4) vorgesehenen Antriebsrollen (10A, 10B) durch einen Elektromotor (9) angetrieben werden, dessen Motordrehzahl und/oder dessen Motorstromsignal zur Erfassung der Drahtbewegung der Schweißdrahtelektrode (4) überwacht wird.

9. Verfahren nach einem der vorangehenden Ansprüche, wobei ein durch die Antriebsrollen (10A, 10B) an einer Andruckstelle der Schweißdrahtelektrode (4) bewirkte Oberflächenabnutzung der Drahtoberfläche der Schweißdrahtelektrode (4) anhand eines markanten Rauschens in einem Motordrehzahlsignal und/oder in dem Motorstromsignal detektiert wird.

10. Verfahren nach einem der vorangehenden Ansprüche, wobei nach Ablauf einer vorgegebenen Abtastbetriebszeit, nach Erreichen einer vorgegebenen Abtaststrecke und/oder nach Erreichen einer vorgegebenen Anzahl von Abtastwerten die aus dem Schweißbrenner (3) herausragende Schweißdrahtelektrode (4), die zur Abtastung der Werkstückoberfläche (2A) verwendet wird, um eine vorgegebene Länge aus dem Schweißbrenner (3) herausbefördert und abgeschnitten wird.

11. Verfahren nach einem der vorangehenden Ansprüche, wobei nach Detektion einer Oberflächenabnutzung der Drahtoberfläche der Schweißdrahtelektrode (4) die aus dem Schweißbrenner (3) herausragende Schweißdrahtelektrode (4), die zur Abtastung der Werkstückoberfläche (2A) verwendet wird, um eine vorgegebene Länge aus dem Schweißbrenner (3) herausbefördert und abgeschnitten wird.

12. Verfahren nach einem der vorangehenden Ansprüche, wobei ein mechanischer Kontakt des Drahtendes (4A) der Schweißdrahtelektrode (4) mit der Werkstückoberfläche (2A) des Werkstückes (2) elektrisch erfasst wird.

13. Verfahren nach Anspruch 1 oder 2, wobei eine mechanische Kontaktierung der Werkstückoberfläche (2A) durch das Drahtende (4A) der Schweißdrahtelektrode (4) durch Auswertung eines Motordrehzahlsignals und/oder eines Motorstromsignals des für den Antrieb der Antriebsrollen (10A, 10B) vorgesehenen Elektromotors (9) detektiert wird.

14. Verfahren nach einem der vorangehenden Ansprüche 1 bis 13, wobei ein Bewegungsprofil und/oder eine Bewegungsfrequenz der Schweißdrahtelektrode (4) in Abhängigkeit eines Materials der Schweißdrahtelektrode (4) eingestellt wird.

15. Verfahren nach einem der vorangehenden Ansprüche 1 bis 14, wobei das Drahtende (4A) der Schweißdrahtelektrode (4) einen Werkzeugbezugspunkt, TCP, bildet, der mittels eines Kalibrierkörpers (32) zur Reduzierung von Abtastmessfehlern kalibriert wird.

16. Verfahren nach einem der vorangehenden Ansprüche 1 bis 15,
wobei die an dem Drahtende (4A) der Schweißdrahtelektrode (4) anliegende elektrische Spannung (U) vor der Abtastung der Werkstückoberfläche (2A) auf einen definierten Wert eingestellt wird und während der Abtastung der Werkstückoberfläche (2A) des Werkstückes (2) die elektrische Spannung (U) ungeregelt an dem Drahtende (4A) der Schweißdrahtelektrode (4) anlegt, sodass nach Detektion eines elektrischen Kontaktes des Drahtendes (4A) mit der Werkstückoberfläche (2A) durch den aufgrund eines elektrischen Kurzschlusses fließenden elektrischen Strom (I) die thermische Belastung der Schweißdrahtelektrode (4) gering gehalten wird.

17. Abtastvorrichtung für ein Schweißgerät (SG) zur Abtastung einer Werkstückoberfläche (2A) eines metallischen Werkstückes (2),
**dadurch gekennzeichnet, dass**
die Abtastvorrichtung (1) geeignet ist, zur Bestimmung von Abtastwerten (d) einen Schweißbrenner (3) mit einer Schweißdrahtelektrode (4) relativ zur abzutastenden Werkstückoberfläche (2A) des Werkstückes (2) zu bewegen und dabei ein Drahtende (4A) der Schweißdrahtelektrode (4) bezüglich der Werkstückoberfläche (2A) wiederkehrend zunächst hinzubewegen, bis jeweils ein Kontakt mit dem metallischen Werkstück (2) an einer Abtastposition auf der Werkstückoberfläche (2A) des metallischen Werkstückes (2) detektiert wird und anschließend das Drahtende (4A) der Schweißdrahtelektrode (4) zurückzubewegen,
wobei durch den Schweißbrenner (3) Abtastwerte an Abtastpositionen auf der Werkstückoberfläche (2A) des metallischen Werkstückes (2) zumindest teilweise mehrfach zur automatischen Ermittlung von Abtastmessfehlern erfasst werden.

**Claims**

1. Method for scanning a workpiece surface (2A) of a metal workpiece (2), in which a welding torch (3) comprising a welding wire electrode (4) moves relative to the workpiece surface (2A) to determine scanning values,
**characterised in that**
a wire end (4A) of the welding wire electrode (4) is repeatedly moved towards the workpiece surface (2A), in each case until contact with the metal workpiece (2) is detected at a scanning position (P) on the workpiece surface (2A) of the metal workpiece (2), and the wire end (4A) of the welding wire electrode (4) is subsequently moved back,
the welding torch (3) detecting scanning values (d) at scanning positions (P), at least in some cases multiple times, to determine scanning measurement errors.

2. Method according to claim 1,
wherein the wire end (4A) of the welding wire electrode (4) protrudes out of the welding torch (3) and is moved back and forth with an adjustable movement profile and/or at an adjustable movement frequency.

3. Method according to either claim 1 or claim 2,
wherein the welding torch (3) comprising the welding wire electrode (4) is moved on a scanning path relative to the workpiece surface (2A) of the metal workpiece (2) to determine first scanning values at scanning positions and subsequently on the same scanning path to determine second scanning values at the scanning positions.

4. Method according to claim 3,
wherein the first scanning values (d) determined along the scanning path and the second scanning values (d') determined along the scanning path are compared to determine scanning measurement errors.

5. Method according to any of preceding claims 1 to 4,
wherein the welding wire electrode (4) a movement profile and/or movement frequency of the welding wire electrode is adapted by drive rollers (10A, 10B) to reduce sampling measurement errors as a function of the determined scanning measurement error.

6. Method according to any of preceding claims 1 to 5,
wherein a movement of the welding wire electrode (4) is detected to monitor a force transmission to the welding wire electrode (4) brought about by drive rollers (10A, 10B) at a contact point of a wire surface of the welding wire electrode (4) .

7. Method according to claim 6,
wherein, on the basis of the detected wire movement of the welding wire electrode (4), a surface wear brought about by the drive rollers (10A, 10B) at the contact point of the wire surface of the welding wire electrode (4) is automatically detected, and the welding wire electrode (4) is conveyed to a different contact point to reduce resulting sampling measurement errors due to the drive rollers (10A, 10b).

8. Method according to any of the preceding claims,
wherein the drive rollers (10A, 10B) provided for conveying the welding wire electrode (4) are driven by an electric motor (9), the motor rotational speed and/or motor current signal of which are monitored to detect the wire movement of the welding wire electrode (4).

9.  Method according to any of the preceding claims, wherein a surface wear of the wire surface of the welding wire electrode (4), brought about by the drive rollers (10A, 10B) at a contact point of the welding wire electrode (4), is detected by way of a distinctive noise in a motor rotational speed signal and/or in the motor current signal.

10. Method according to any of the preceding claims, wherein, after a predetermined sampling operating time elapses, after a predetermined sampling distance is achieved, and/or after a predetermined number of sampling values is achieved, the welding wire electrode (4) protruding from the welding torch (3) and used for sampling the workpiece surface (2A) is conveyed out of the welding torch (3) by a predetermined length and cut to size.

11. Method according to any of the preceding claims, wherein, after a surface wear of the wire surface of the welding wire electrode (4) is detected, the welding wire electrode (4) protruding from the welding torch (3) and used for sampling the workpiece surface (2A) is conveyed out of the welding torch (3) by a predetermined length and cut to size.

12. Method according to any of the preceding claims, wherein a mechanical contact of the wire end (4A) of the welding wire electrode (4) with the workpiece surface (2A) of the workpiece (2) is detected electrically.

13. Method according to either claim 1 or claim 2, wherein a mechanical contacting of the workpiece surface (2A) by the wire end (4A) of the welding wire electrode (4) is detected by evaluating a motor rotational speed signal and/or motor current signal of the electric motor (9) provided for driving the drive rollers (10A, 10B).

14. Method according to any of preceding claims 1 to 13, wherein a movement profile and/or movement frequency of the welding wire electrode (4) are set as a function of a material of the welding wire electrode (4).

15. Method according to any of preceding claims 1 to 14, wherein the wire end (4A) of the welding wire electrode (4) forms a tool centre point, TCP, which is calibrated by means of a calibration body (32) to reduce sampling measurement errors.

16. Method according to any of preceding claims 1 to 15, wherein the electrical voltage (U) present at the wire end (4A) of the welding wire electrode (4) is set to a defined value before the scanning of the workpiece surface (2A), and during the scanning of the workpiece surface (2A) of the workpiece (2) the electrical voltage (U) is present unregulated at the wire end (4A) of the welding wire electrode (4), in such a way that, after an electrical contact of the wire end (4A) with the workpiece surface (2A) is detected by way of the electrical current (I) flowing as a result of an electrical short circuit, the thermal load on the welding wire electrode (4) is kept low.

17. Sampling device for a welding apparatus (SG) for scanning a workpiece surface (2A) of a metal workpiece (2), **characterised in that** the scanning device (1) is suitable for moving a welding torch (3) comprising a welding wire electrode (4) relative to the workpiece surface (2A) to be scanned of the workpiece (2) to determine sampling values (d), and thus for initially moving a wire end (4A) of the welding wire electrode (4) repeatedly towards the workpiece surface (2A), in each case until contact with the metal workpiece (2) is detected at a scanning position on the workpiece surface (2A) of the metal workpiece (2), and subsequently moving the wire end (4A) of the welding wire electrode (4) back, the welding torch (3) detecting scanning values at scanning positions, on the workpiece surface (2A) of the metal workpiece (2), at least in some cases multiple times, to determine scanning measurement errors automatically.

## Revendications

1.  Procédé de balayage d'une surface de pièce (2A) d'une pièce métallique (2), dans lequel un chalumeau de soudage (3) avec un fil-électrode de soudage (4) est déplacé par rapport à la surface de pièce (2A) pour déterminer des valeurs de balayage, **caractérisé en ce que** une extrémité de fil (4A) du fil-électrode de soudage (4) est déplacée de manière répétée vers la surface de pièce (2A) jusqu'à ce que, à chaque fois, un contact avec la pièce métallique (2) soit détecté à une position de balayage (P) sur la surface de pièce (2A) de la pièce métallique (2), et l'extrémité de fil (4A) du fil-électrode de soudage (4) est ensuite ramenée en arrière, dans lequel des valeurs de balayage (d) à des positions de balayage (P) sont détectées au moins partiellement à plusieurs reprises par le chalumeau de soudage (3) afin de déterminer des erreurs de mesure de balayage.

2.  Procédé selon la revendication 1, dans lequel l'extrémité de fil (4A) du fil-électrode de soudage (4) dépasse du chalumeau de soudage (3) et est déplacée vers l'avant et vers l'arrière avec un profil de déplacement réglable et/ou une fréquence de déplacement réglable.

**3.** Procédé selon la revendication 1 ou 2, dans lequel le chalumeau de soudage (3) avec le fil-électrode de soudage (4) est déplacé sur une trajectoire de balayage par rapport à la surface de pièce (2A) de la pièce métallique (2) pour déterminer des premières valeurs de balayage à des positions de balayage et ensuite sur la même trajectoire de balayage pour déterminer des secondes valeurs de balayage aux positions de balayage.

**4.** Procédé selon la revendication 3, dans lequel les premières valeurs de balayage (d) déterminées le long de la trajectoire de balayage et les secondes valeurs de balayage (d') déterminées le long de la trajectoire de balayage sont comparées pour déterminer des erreurs de mesure de balayage.

**5.** Procédé selon l'une des revendications 1 à 4 précédentes, dans lequel le fil-électrode de soudage est adapté (4) par des rouleaux d'entraînement (10A, 10B) pour réduire les erreurs de mesure de balayage en fonction des erreurs de mesure de balayage déterminées un profil de déplacement et/ou une fréquence de déplacement.

**6.** Procédé selon l'une des revendications 1 à 5 précédentes, dans lequel un déplacement du fil-électrode de soudage (4) est détecté pour surveiller une transmission de force effectuée par des rouleaux d'entraînement (10A, 10B) sur le fil-électrode de soudage (4) au niveau d'un point de pression d'une surface de fil du fil-électrode de soudage (4).

**7.** Procédé selon la revendication 6, dans lequel, sur la base du déplacement de fil détecté du fil-électrode de soudage (4), une usure de surface produite par les rouleaux d'entraînement (10A, 10B) au niveau du point de pression de la surface de fil du fil-électrode de soudage (4) est détectée automatiquement et le fil-électrode de soudage (4) est transporté vers un autre point de pression par les rouleaux d'entraînement (10A, 10B) afin de réduire les erreurs de mesure de balayage provoquées par celle-ci.

**8.** Procédé selon l'une des revendications précédentes, dans lequel les rouleaux d'entraînement (10A, 10B) prévus pour transporter le fil-électrode de soudage (4) sont entraînés par un moteur électrique (9) dont la vitesse de rotation de moteur et/ou le signal de courant de moteur sont surveillés pour détecter le déplacement de fil du fil-électrode de soudage (4).

**9.** Procédé selon l'une des revendications précédentes, dans lequel une usure de surface de la surface de fil du fil-électrode de soudage (4) produite par les rouleaux d'entraînement (10A, 10B) au niveau d'un point de pression du fil-électrode de soudage (4) est détectée à l'aide d'un bruit marquant dans un signal de vitesse de rotation de moteur et/ou dans le signal de courant de moteur.

**10.** Procédé selon l'une des revendications précédentes, dans lequel, après écoulement d'un temps de balayage prédéfini, après avoir atteint une distance de balayage prédéfinie et/ou après avoir atteint un nombre prédéfini de valeurs de balayage, le fil-électrode de soudage (4) dépassant du chalumeau de soudage (3) et utilisé pour le balayage de la surface de pièce (2A) est transporté hors du chalumeau de soudage (3) sur une longueur prédéfinie et coupé.

**11.** Procédé selon l'une des revendications précédentes, dans lequel, après détection d'une usure de surface de la surface de fil du fil-électrode de soudage (4), le fil-électrode de soudage (4) dépassant du chalumeau de soudage (3) et utilisé pour le balayage de la surface de pièce (2A) est transporté hors du chalumeau de soudage (3) sur une longueur prédéfinie et coupé.

**12.** Procédé selon l'une des revendications précédentes, dans lequel un contact mécanique de l'extrémité de fil (4A) du fil-électrode de soudage (4) avec la surface de pièce (2A) de la pièce (2) est détecté électriquement.

**13.** Procédé selon la revendication 1 ou 2, dans lequel une mise en contact mécanique entre la surface de pièce (2A) et l'extrémité de fil (4A) du fil-électrode de soudage (4) est détectée en évaluant un signal de vitesse de rotation de moteur et/ou un signal de courant de moteur du moteur électrique (9) prévu pour l'entraînement des rouleaux d'entraînement (10A, 10B).

**14.** Procédé selon l'une des revendications 1 à 13 précédentes, dans lequel un profil de déplacement et/ou une fréquence de déplacement du fil-électrode de soudage (4) sont réglés en fonction d'un matériau du fil-électrode de soudage (4).

**15.** Procédé selon l'une des revendications 1 à 14 précédentes, dans lequel l'extrémité de fil (4A) du fil-électrode de soudage (4) forme un point de référence d'outil, TCP, qui est étalonné au moyen d'un corps d'étalonnage (32) pour réduire les erreurs de mesure de balayage.

**16.** Procédé selon l'une des revendications 1 à 15 précédentes, dans lequel la tension électrique (U) appliquée à l'extrémité de fil (4A) du fil-électrode de soudage (4) est réglée à une valeur définie avant le balayage de la surface de pièce (2A) et, pendant le balayage de la surface de pièce (2A) de la pièce (2), la tension électrique (U) est appliquée à l'extrémité de fil (4A) du fil-électrode de soudage (4) d'une manière non régulée, de sorte que, après détection d'un contact électrique de l'extrémité de fil (4A) avec la surface de pièce (2A), la charge thermique du fil-électrode de soudage (4) est maintenue faible par le courant électrique (I) circulant en raison d'un court-circuit électrique.

17. Dispositif de balayage pour un appareil de soudage (SG), destiné à balayer une surface de pièce (2A) d'une pièce métallique (2),
**caractérisé en ce que**
le dispositif de balayage (1) est adapté à déplacer un chalumeau de soudage (3) avec un fil-électrode de soudage (4) par rapport à la surface de pièce (2A) de la pièce (2) à balayer afin de déterminer des valeurs de balayage (d) et, ce faisant, à déplacer d'abord de manière répétée une extrémité de fil (4A) du fil-électrode de soudage (4) vers la surface de pièce (2A) jusqu'à ce que, à chaque fois, un contact avec la pièce métallique (2) soit détecté à une position de balayage sur la surface de pièce (2A) de la pièce métallique (2), puis à ramener en arrière l'extrémité de fil (4A) du fil-électrode de soudage (4), dans lequel des valeurs de balayage à des positions de balayage sur la surface de pièce (2A) de la pièce métallique (2) sont détectées au moins partiellement à plusieurs reprises par le chalumeau de soudage (3) pour déterminer automatiquement des erreurs de mesure de balayage.

# Fig.1

# Fig.2

# Fig.3

# Fig.4

Fig.5

# Fig.6

EP 3 645 202 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5399837 A
- JP 2007090390 A
- US 20020011474 A1